# FASCICULE DE BREVET EUROPEEN

(11) **EP 4 652 664 B1**
(45) Date de publication et mention de la délivrance du brevet: **07.10.2026**
(21) Numéro de dépôt: 24700307.2
(22) Date de dépôt: 12.01.2024
(51) Int. Cl.: H02K 3/28, H02K 7/09, H02K 11/33, H02K 21/14

(54) **MACHINE ÉLECTRIQUE ALIMENTÉE PAR DES SOURCES MULTIPLES ET PROCÉDÉS ASSOCIÉS**
ELEKTRISCHE MASCHINE MIT MEHRQUELLENANTRIEB UND ZUGEHÖRIGE VERFAHREN
ELECTRIC MACHINE POWERED BY MULTIPLE SOURCES AND ASSOCIATED METHODS

(30) Priorité: 17.01.2023 FR 2300435
(43) Date de publication de la demande: 26.11.2025
(73) Titulaire: Centre National de la Recherche Scientifique, 75016 Paris (FR); CentraleSupélec, 91190 - Gif sur Yvette (FR); Université Paris-Saclay, 91190 Gif-sur-Yvette (FR); Ecole Normale Supérieure Paris-Saclay, 91190 Gif-sur-Yvette (FR); SORBONNE UNIVERSITE, 75006 Paris (FR)
(72) Inventeur: BETHOUX, Olivier, 75015 Paris (FR); CIZERON, Antoine, 91300 Massy (FR); OJEDA, Javier, 91400 Orsay (FR)
(74) Mandataire: Vidon Brevets & Stratégie
(86) Numéro de dépôt international: PCT/EP2024/050644
(87) Numéro de publication internationale: WO 2024/153540

(56) Documents cités:
- EP-A1- 3 573 217
- WO-A1-2018/097020
- WO-A1-2018/190114
- WO-A1-2022/020240
- US-A1- 2021 075 284
- US-B2- 9 231 513

## Description

### Domaine technique

La présente invention concerne un système multi-sources. Elle concerne aussi un procédé de commande dudit système multi-sources. L'invention vise des domaines tels que : la génération de réseaux de bord en aéronautique, le domaine des éoliennes ou encore le stockage inertiel associés à des réseaux multiples.

### Etat de la technique antérieure

Dans les solutions « multi-sources » habituelles, le transfert de puissance entre les sources se fait par le biais des efforts mécaniques. Cependant, cela induit une perturbation des efforts radiaux ou des ondulations de couple dans la machine. En effet, ces phénomènes mécaniques induisent des vibrations et dégradent la durée de vie des éléments mécaniques. De plus, dans ces structures, le transfert de puissance entre les sources est limité par le point de fonctionnement couple/vitesse considéré. Ce transfert induit également des inhomogénéités du champ d'induction dans la machine et donc des pertes supplémentaires.

Il existe deux catégories de structures qui permettent l'échange d'énergie entre sources au travers des efforts mécaniques :
1) les structures subdivisées en secteurs, basées sur le nombre de paires de pôles de la machine. On parlera ici de machine sectorisée. Cette subdivision permet d'obtenir plusieurs sous-systèmes triphasés indépendants électriquement et faiblement couplés magnétiquement. Ainsi, le transfert de puissance entre les différentes sources augmente inutilement le niveau d'induction dans la machine et perturbe les efforts radiaux. Les efforts radiaux peuvent être compensés moyennant l'ajout de courants selon l'axe direct du flux magnétique dans la machine. Tous ces éléments font que le transfert de puissance entre sous-systèmes triphasés dans ces structures est complexe, génère des pertes et n'est accessible que sur une zone réduite de fonctionnement.
2) les structures dites multi-phasées subdivisées en plusieurs sous-systèmes indépendants avec un nombre premier de phases. Le nombre total de phases n'est donc pas un nombre premier pour permettre l'utilisation de plusieurs sources d'alimentation. En général, une solution avec plusieurs systèmes triphasés est employée pour des raisons de standardisation industrielle. On parlera ici de machine multi-triphasée. Cette subdivision permet d'obtenir plusieurs sous-systèmes triphasés indépendants électriquement et moyennement couplés magnétiquement. Ainsi, le transfert de puissance entre les différentes sources induit également des inhomogénéités d'induction dans le circuit magnétique de la machine (et donc une augmentation des pertes fer) et perturbe les harmoniques de couple.

Le document US2021/075284 A1 décrit un système multi-sources.

Le but de la présente invention est de résoudre au moins un de ces inconvénients.

### Exposé de l'invention

Cet objectif est atteint avec un système multi-sources comprenant une machine électrique, du type comprenant un rotor et un stator, le stator comprenant une pluralité de bobinages fait d'enroulements de matériau conducteur isolé, chaque bobinage comprenant une pluralité de bobines alimentées indépendamment,
caractérisé en ce que le système comprend également une pluralité de sources d'alimentation continues et une pluralité de convertisseurs d'électronique de puissance associés à différentes bobines de la machine électrique, chaque source d'alimentation alimentant un ou des convertisseurs d'électronique de puissance et chaque source d'alimentation étant reliée à au moins une bobine de chaque bobinage de la machine électrique.

L'invention proposée permet d'améliorer l'utilisation d'une machine électrique dans un contexte d'alimentation multi-sources en dissociant le transfert de puissance entre sources de l'aspect mécanique. Selon l'invention, le transfert de puissance se fait principalement par le biais de phénomènes électromagnétiques et sans les perturbations mécaniques suscitées. Les plages de transfert de puissance sont étendues et le rendement de la conversion est amélioré. Le degré de liberté du nombre de sources d'alimentation interconnectées au travers de la machine électrique est également augmenté par l'invention.

L'invention est équivalente aux structures traditionnelles en termes de complexité de fabrication. En revanche, elle permet d'étendre la plage de transfert de puissance atteignable et d'améliorer le rendement du transfert de puissance. Enfin, elle permet d'associer un plus grand nombre de sources que toutes les autres solutions.

Les bobines d'un même bobinage sont alimentées par des signaux de même phase et le stator comprend des encoches.

Chaque encoche comprend les bobines d'un même bobinage et les bobines d'un même bobinage sont alimentées par des sources d'alimentation distinctes.

Un bobinage selon l'invention peut être « réparti/distribué » ou « dentaire/concentrique » ou encore « à pas fractionnaire » selon le mode de réalisation.

La pluralité de bobinages peut être répartie en au moins deux zones.

Les au moins deux zones peuvent correspondre à des secteurs de machine électrique. Les au moins deux zones peuvent correspondre à des systèmes *mₚ-*phasés de machine électrique. On entend par « secteurs », des zones de la machine électrique correspondant à au moins une paire de pôle magnétique du stator.

Les au moins deux zones peuvent être fractionnées, chaque fraction de chaque zone étant associée à un convertisseur d'électronique de puissance, la fraction et son convertisseur d'électronique de puissance constituant une brique élémentaire de conversion électromécanique.

Chaque brique élémentaire de conversion mécanique peut être associée à une source d'alimentation.

De manière générale, une machine générique possédant *m* phases, *p* paires de pôles statoriques avec *Ns* spires par pôle et par phase peut conduire à l'utilisation d'un nombre *p* × *k_{B}* de briques de conversion électromécanique (regroupement onduleur et fraction) où *k_{B}* est un entier diviseur de *Ns.* Si m n'est pas un nombre premier, tel que *m* = *n* × *mₚ*, il est également possible de dissocier les *m* phases en *n* systèmes *mₚ-*phasés. Conduisant au total à *p* × *n* × *k_{B}* briques élémentaires. La brique élémentaire de conversion électromécanique peut impliquer un nombre premier *mₚ* de phases. Dans la majorité des cas, ce nombre premier vaut *mₚ* = 3.

Une brique élémentaire de conversion électromécanique comprend un système *mₚ*-phasé de bobines associé à son propre convertisseur statique d'électronique de puissance (onduleur). Le convertisseur est associé à l'une des sources continues du système, délivrant une tension *U_{DC,i}*. Parmi les manières d'agencer le convertisseur avec ces *mₚ* bobines, on retrouve deux configurations :

Dans la première, le convertisseur possède *mₚ* bras d'onduleur, chacun associé à une bobine. Les bobines possèdent un potentiel commun que l'on appelle le « neutre ». Ce neutre impose un courant homopolaire nul dans la structure.

Dans la seconde configuration, le convertisseur possède *mₚ* ponts complets d'onduleurs, chacun étant associé à une bobine. Il n'y a pas de point neutre, il faut donc deux fois plus d'interrupteurs et il est nécessaire de contrôler la composante homopolaire. Cette composante n'a pas d'effet sur le couple mais peut être exploitée pour le transfert de puissance entre sources.

L'invention propose un fractionnement des enroulements permettant de dissocier les problématiques de répartition des efforts mécaniques (harmonique de couple ou efforts radiaux) de celles du transfert d'énergie entre les sources. Pour cela, la structure multi-sources doit présenter *k_{B}* sources, chaque source alimentant *p* × n convertisseurs, l'ensemble des convertisseurs associé à chaque source étant relié à une bobine de chaque bobinage de la machine électrique. Le contrôle des harmoniques de couple et des efforts radiaux est pertinent dans certaines applications (respectivement à faible ondulation de couple ou « sans-roulements »). Ainsi, afin de conserver ces moyens d'action/de contrôle, l'invention propose d'allier le fractionnement d'un enroulement en une pluralité de bobines avec la subdivision en zones tels que des secteurs ou des systèmes multi-phases et de hiérarchiser la structure de contrôle de manière à conserver le découplage entre le transfert d'énergie et les efforts mécaniques.

Les systèmes *mₚ*-phasés peuvent correspondre à des systèmes *mₚ*-phasés de machine électrique décalés temporellement d'un angle électrique non multiple de 60°. Cela correspond aux structures multi-phasées avec un nombre de phases électriquement distinctes qui soit multiple de trois.

Le nombre de bobines dans un enroulement peut être supérieur ou égal au nombre de sources d'alimentation. Par exemple dans le cas où le système comprend deux sources d'alimentation, le nombre de bobines dans un même enroulement doit être supérieur ou égal à deux. Dans le cas de trois sources d'alimentation, le nombre de bobines dans un même enroulement doit être supérieur ou égal à trois.

Les enroulements peuvent avoir un nombre de spires multiple du nombre de sources d'alimentation. Par exemple dans le cas où le système comprend deux sources d'alimentation, le nombre de spires de chaque enroulement correspond à un multiple de deux. Dans le cas de trois sources d'alimentation, le nombre de spires de chaque enroulement correspond à un multiple de trois.

Suivant encore un autre aspect de l'invention, il est proposé un procédé de commande appliqué sur un système multi-sources selon l'invention par au moins un circuit de contrôle, le procédé comprenant les étapes suivantes :
- première répartition des courants de la pluralité de sources d'alimentation vers au moins une zone de la machine électrique,
- seconde répartition des courants vers au moins une fraction de chaque zone. Les deux étapes du procédé sont indépendantes l'une de l'autre.

La répartition des courants vers chacune des zones de la machine électrique permet de fixer l'état mécanique (couple et efforts). La répartition des courants vers chacune des fractions de chaque zone permet de fixer les transferts de puissance entre sources.

La répartition des courants vers chacune des zones peut être réalisée en fonction des besoins en termes d'efforts radiaux ou d'harmoniques de couple. Il est également possible d'utiliser la répartition de courant vers chacune des zones en fonction des besoins d'échange d'énergie entre les différentes sources d'alimentation. La principale application dans laquelle garder le contrôle des efforts radiaux est nécessaire, est lorsque l'on veut atténuer les efforts appliqués aux roulements mécaniques ou bien complètement assurer la sustentation magnétique du rotor. Les efforts radiaux sont appliqués par le stator et ses conducteurs sur le rotor pour centrer le rotor magnétiquement ou simplement limiter les efforts radiaux que le rotor applique sur les roulements.

Dans une structure multi-sources, il faut gérer la puissance prélevée sur chaque source et même plus généralement, gérer les échanges de puissance entre les différentes sources pour assurer leur équilibrage ou tout autre fonction exigée par une supervision énergétique. C'est au travers de la machine qu'on assure la gestion énergétique globale du système.

La répartition de l'au moins un courant vers chacune des fractions de chaque zone peut être réalisée en fonction des besoins d'échange d'énergie entre les différentes sources d'alimentation. Cela permet d'assurer l'équilibrage des sources d'alimentation et plus généralement, de contrôler l'énergie donnée ou prise par celles-ci.

Lorsque chaque source d'alimentation alimente un convertisseur d'électronique de puissance, le procédé peut comprendre l'étape suivante :
- répartition directe des courants de la pluralité de sources d'alimentation vers au moins une fraction de la machine électrique.

La répartition des courants de la pluralité de sources d'alimentation vers au moins une fraction peut être équilibrée.

Dans ce mode de réalisation, chaque source alimente un unique convertisseur de puissance.

L'invention emploie une disposition des différents bobinages élémentaires permettant de maximiser leur couplage magnétique. Le transfert de puissance entre les différentes sources se fait de manière électromagnétique, avec un impact mécanique réduit sur le rotor. Les deux fonctions de production de couple et de transfert de puissance inter-source sont par conception rendues quasi indépendantes. Par conséquent, la génération du couple et les efforts radiaux ne dépendent pas du transfert de puissance entre les sources. Le niveau d'induction dans le circuit magnétique ne dépend que du point de fonctionnement en couple et ne dépend donc pas du transfert de puissance entre les sources. Les pertes fer côté machine sont donc réduites dans notre solution. Les possibilités de transfert de puissance sont augmentées à proximité de la vitesse de base.

Le procédé peut également comprendre l'étape suivante :
- introduction d'une composante supplémentaire en courant évoluant à une fréquence arbitraire.

Le transfert de puissance s'opère à cette fréquence arbitraire, ce qui permet de découpler le transfert de puissance du point de fonctionnement mécanique. Cela permet notamment de transférer de la puissance entre les sources lorsque le rotor est bloqué. Là où un autopilotage standard donnerait, à l'arrêt, des grandeurs continues incompatibles avec un transfert de puissance électromagnétique.

Le procédé peut également comprendre une étape de contrôle de l'au moins une fraction permettant d'activer et/ou désactiver au moins une fraction de la machine électrique pendant une période de temps T.

La répartition des courants de la pluralité de sources d'alimentation vers au moins une fraction peut être également réalisée en fonction d'une fréquence de découpage de l'un ou des convertisseurs d'électronique de puissance.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
La figure 1a illustre une machine électrique dans une version triphasée selon l'invention.
La figure 1b illustre un plan grossi de la machine électrique de la figure 1a.
La figure 2a présente un système multi-sources avec contrôle des efforts radiaux selon un premier mode de réalisation.
La figure 2b présente un système multi-sources avec contrôle des efforts radiaux selon un deuxième mode de réalisation.
La figure 3 illustre le procédé de commande appliqué au système multi-sources de la figure 2b.
La figure 4a illustre un système multi-sources avec contrôle des ondulations de couple selon un premier mode de réalisation.
La figure 4b illustre un système multi-sources avec contrôle des ondulations de couple selon un deuxième mode de réalisation.
La figure 5 illustre le procédé de commande appliqué au système multi-sources de la figure 4b.
La figure 6 illustre un système multi-sources avec contrôle des ondulations de couple et des efforts radiaux.
La figure 7 illustre le procédé de commande appliqué au système multi-sources de la figure 6.
La figure 8 illustre le procédé de commande appliqué à un système multi-sources selon un autre mode de réalisation.

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

Dans la description qui suit, le terme « machine électrique » est utilisé pour désigner une machine électrique proprement dite transformant de l'énergie électrique en énergie mécanique (moteur) mais aussi sa réciproque (génératrice). Le principe de la présente invention peut être appliqué à tous types de machine électrique comme par exemple une machine : synchrone, asynchrone, à reluctance variable etc. Le type de machine électrique dépend du rotor qui est utilisé.

De manière générale, on considère une machine générique possédant *m* phases, *p* paires de pôles statoriques avec *Ns* spires par pôle et par phase. Si *m* n'est pas un nombre premier, tel que *m* = *n* × *mₚ*, il est également possible de dissocier les *m* phases en *n* systèmes *mₚ*-phasés. On suppose qu'au sein de chaque encoche, les bobinages sont fractionnés en *k_{B}* bobines. Cette structure permet de découpler la gestion énergétique de la génération des efforts radiaux tout en garantissant d'utiliser le circuit magnétique de la machine de manière homogène lors des échanges d'énergie.

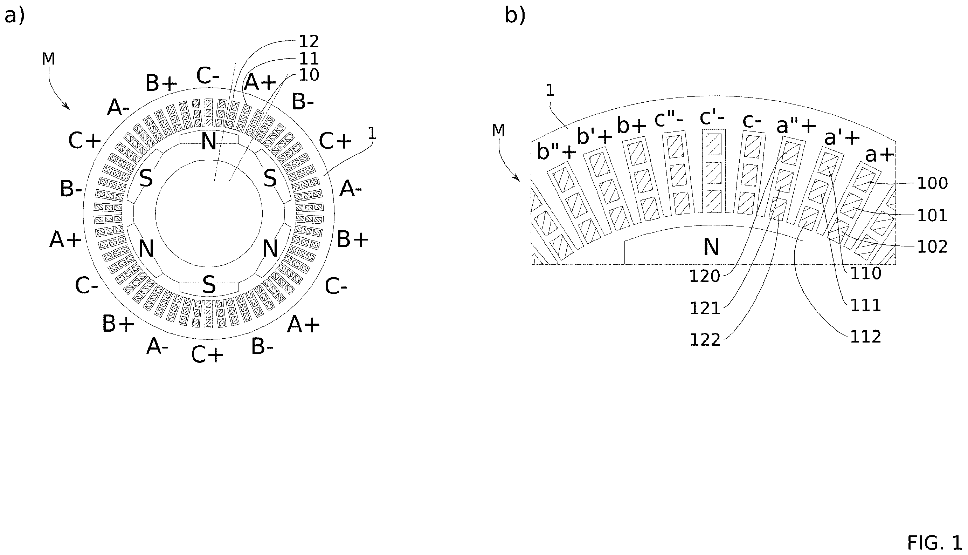

La figure 1a représente une machine électrique selon l'invention. La figure 1b représente un plan grossi de la machine électrique de la figure 1a. Une machine électrique est constituée d'un rotor (non représenté), et d'un stator 1 comprenant des bobinages dans des encoches 10, 11, 12. Ici, les trois bobinages 10, 11, 12 appartiennent à une même phase A+. Les bobinages 10, 11, 12 sont fractionnés en une pluralité de bobines 100, 101 et 102, 110, 111, 112 et 120, 121, 122. Chaque bobine 100, 101 et 102 par exemple d'un même bobinage 10 a des bornes qui lui sont propres et par lesquelles elle est alimentée.

Dans l'exemple des figures 1a) et b), chaque bobinage 10, 11, 12 a été fractionné en trois bobines 100, 101 et 102, 110, 111, 112 et 120, 121, 122. Chaque phase A+/-, B+/-, C+/- est fractionnée en *k_{B}* sous-phases couplées magnétiquement (les lignes de champ électromagnétique générées par des bobines d'un même bobinage sont orientées dans le même sens), et constitue ainsi *k_{B}* sous-machines électriques (dans la figure 1a), les sous-machines électriques sont constituées respectivement par les bobines [102,112, 122], [101, 111, 121], et [100, 110, 120]). Ce fractionnement revient donc à positionner des blocs de spires en parallèle plutôt qu'en série, afin de pouvoir les alimenter avec des signaux d'alimentation distincts ayant des tensions plus faibles. Les bobines d'un même bobinage sont alors mécaniquement (mais pas électriquement) en parallèle dans un même bobinage. Etant alimentées par des signaux de même phase, les ampères-tours qu'elles génèrent s'additionnent. Dans l'exemple représenté aux figures 1a) et b), les bobines constituant un même bobinage sont disposées à la suite les unes aux autres, mais elles pourraient également être entrelacées, mélangées, ou superposées, sans que cela ne porte préjudice à l'invention.

En d'autres termes, les bobines 100, 101, 102 d'un même bobinage 10, 11, 12 peuvent être alimentées par des signaux de même phase. Le stator 1 comprend des encoches a, b, c ; a', b', c' et a", b", c". En outre, chaque encoche peut comprendre les bobines 100, 101, 102 d'un même bobinage 10, 11, 12. Par ailleurs, les bobines 100, 101, 102 d'un même bobinage peuvent être alimentées par des sources d'alimentation 2 distinctes.

Sur les figures 1a, 1b, 2a, 2b, 4a, 4b, et 6, on a représenté un mode de réalisation des encoches. Chaque encoche peut comprendre au moins deux bobines d'un même bobinage. Par exemple, chaque encoche comprend trois bobines 100, 101, 102 d'un même bobinage 10, 11, 12. Une encoche forme un logement pour loger plusieurs bobines. Chaque encoche s'étend longitudinalement le long d'un axe, dit radial, associé à l'encoche. Chaque axe radial est orienté vers le centre la machine, c'est-à-dire vers le centre du rotor. Un axe radial s'étend le long d'un rayon du rotor de la machine et passe par l'encoche à laquelle l'axe radial est associé.

De façon générale, au sein d'une même encoche, les bobines d'un même bobinage peuvent être disposées à la suite les unes aux autres, ou également être entrelacées, ou mélangées, ou superposées. Par exemple, comme illustré sur la figure 1b, les bobines d'un même bobinage peuvent être superposées au sein d'une même encoche. C'est-à-dire que les bobines d'un même bobinage logées au sein d'une même encoche peuvent être alignées radialement selon l'axe radial associé à l'encoche.

Par exemple, une encoche a, b, c, et de préférence chaque encoche, est associé à une phase A+/-, B+/-, C+/-. En outre, chaque encoche a, b, c est associé à un bobinage 10, 11, 12. Par ailleurs, chaque bobine d'un même bobinage comprend deux première et deuxième bornes par lesquelles la bobine est alimentée. Par exemple, chaque bobine d'un même bobinage comprend une première borne située au niveau d'une première partie A+, B+, C+ du logement formé par une encoche a, b, c, et une deuxième borne située au niveau d'une deuxième partie A-, B-, C- du logement formé par l'encoche a, b, c.

Les figures 1a et 1b décrivent précisément une machine électrique comprenant un stator à neuf phases soit avec *m* = *n* × *mₚ* = 9 avec *mₚ* = 3, chaque phase ayant trois paires de pôles (*p* = 3). Le stator est composé de dix-huit encoches par paire de pôles, soit cinquante-quatre au total donc, dans sa forme triphasée standard, chaque phase est répartie sur trois encoches consécutives. On considère que chaque encoche comporte trois bobines ou conducteurs ou groupe de conducteurs (*k_{B}* = 3). Chaque bobine ou conducteur est associé à un rang : rang 1, rang 2 ou rang 3, le rang 1 étant caractérisé par la position la plus proche du rotor (centre de la machine électrique). La machine électrique considérée correspond donc à *n* = *p = k_{B}* = 3. Les conducteurs « + » rentrent dans le stator, les conducteurs « - » en sortent.

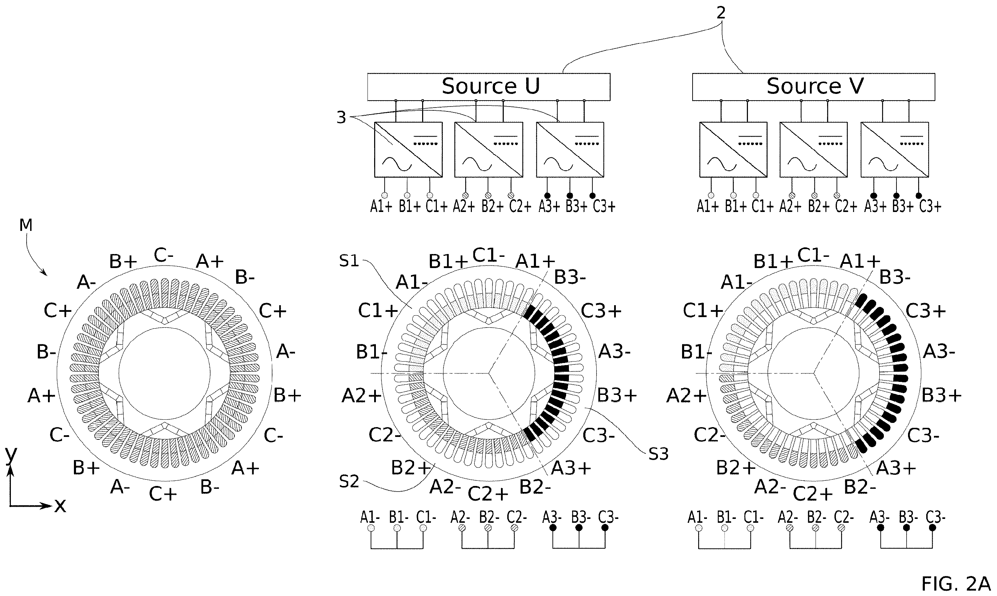

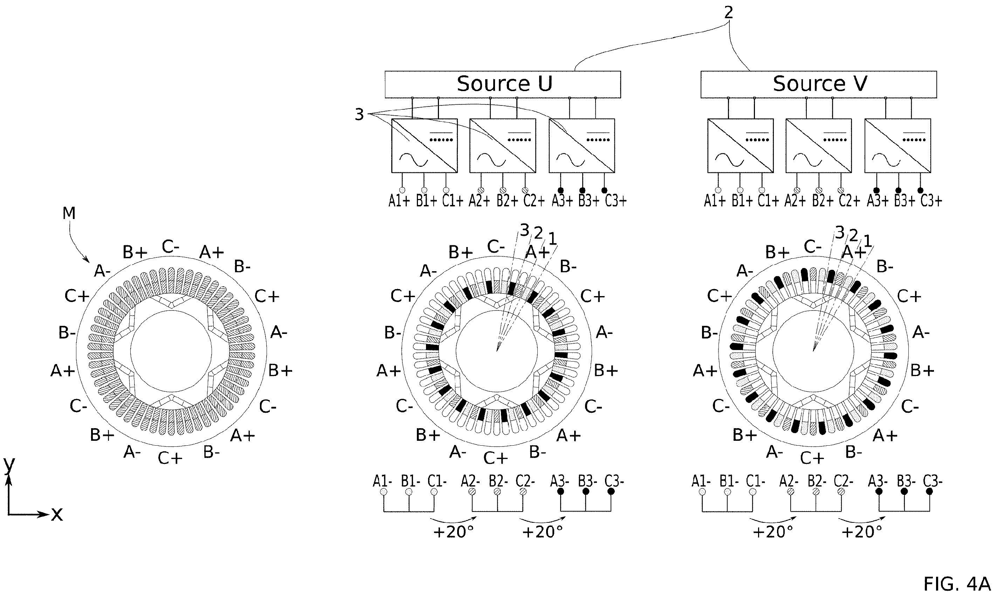

La machine électrique peut être connectée à une pluralité de sources d'alimentation, chaque source d'alimentation étant reliée à une pluralité de convertisseurs de puissance. La source d'alimentation continue alimentant chaque convertisseur de puissance, est une source de tension continue ou redressée délivrant une tension *U_{Q,i}*. Chaque convertisseur comprend un circuit de contrôle. La machine électrique est utilisée comme référence pour présenter les différents modes de réalisation de l'invention. Cependant, la machine électrique des figures 1a) et b) ne limite pas la présente invention à cette application. Celle-ci est donnée à titre d'exemple. Dans d'autres modes de réalisation, *k_{B}* peut être égal à deux par exemple (voir les figures 2a et 4a).

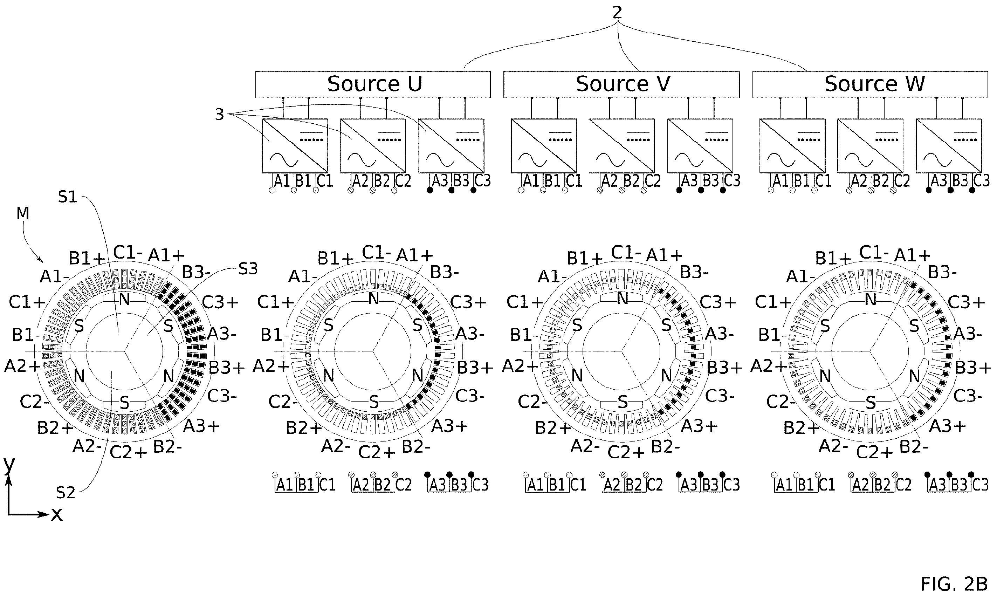

Les figures 2a et 2b présentent un système multi-sources avec contrôle des efforts radiaux, sans couplage entre les fonctions gestion de l'énergie et gestion des efforts radiaux.

On considère une structure permettant d'associer *k_{B}* sources d'énergie à une machine électrique. Chaque source alimente *p* convertisseurs qui sont chacun associés à des paires de pôles distinctes de la machine. Ces différentes paires de pôles sont représentées par des nuances de gris différentes dans la figure suivante. Elles sont également séparées par les traits en pointillés.

La machine électrique des figures 2a et 2b est divisée en trois zones ou secteurs (S1, S2, S3) correspondant aux trois paires de pôles de ladite machine. D'après la figure 2a, le système multi-sources comprend donc une machine électrique M telle que décrite précédemment ainsi qu'une pluralité de sources d'alimentation 2 et une pluralité de convertisseurs de puissance 3. La machine électrique M est connectée à deux sources 2 : U et V. Chaque source 2 est associée à trois convertisseurs de puissance 3. Par conséquent, six convertisseurs 3 de puissance sont employés au total. Ici deux sources d'alimentation 2 sont utilisées, *k_{b}* = 2. Pour chaque source d'alimentation 2, le premier convertisseur 3 est associé à la première paire de pôles statoriques (zone S1) symbolisée par les phases A1+/-, B1+/- et C1+/-. Le deuxième convertisseur est associé à la deuxième paire de pôles statoriques (zone S2) symbolisée par les phases A2+/-, B2+/- et C2+/-. Le troisième convertisseur est associé à la troisième paire de pôles statoriques (zone S3) symbolisée par les phases A3+/-, B3+/- et C3+/-. La source U alimente les bobines de rang 1 dans chacune des zones et la source V alimente les bobines de rang 2 dans chacune des zones.

D'après la figure 2b, et sur le même principe que pour la figure 2a, le système multi-sources comprend une machine électrique M telle que décrite précédemment ainsi qu'une pluralité de sources d'alimentation 2 et une pluralité de convertisseurs de puissance 3. La machine électrique M est connectée à trois sources 2 : U, V et W. Chaque source 2 est associée à trois convertisseurs de puissance 3. Par conséquent, neuf convertisseurs 3 de puissance sont employés au total. Ici trois sources d'alimentation 2 sont utilisées car *k_{B}*=3. Pour chaque source d'alimentation 2, le premier convertisseur 3 est associé à la première paire de pôles statoriques (zone S1) symbolisée par les phases A1+/-, B1+/- et C1+/-. Le deuxième convertisseur est associé à la deuxième paire de pôles statoriques (zone S2) symbolisée par les phases A2+/-, B2+/- et C2+/-. Le troisième convertisseur est associé à la troisième paire de pôles statoriques (zone S3) symbolisée par les phases A3+/-, B3+/- et C3+/-. La source U alimente les bobines de rang 1 dans chacune des zones, la source V alimente les bobines de rang 2 dans chacune des zones et la source W alimente les bobines de rang 3 dans chacune des zones. Dans d'autres modes de réalisation, il est possible de mélanger les rangs et les zones pour une même alimentation, par exemple le rang 1 de la zone 1, le rang 2 de la zone 2 et le rang 3 de la zone 3 sont associés à une même source.

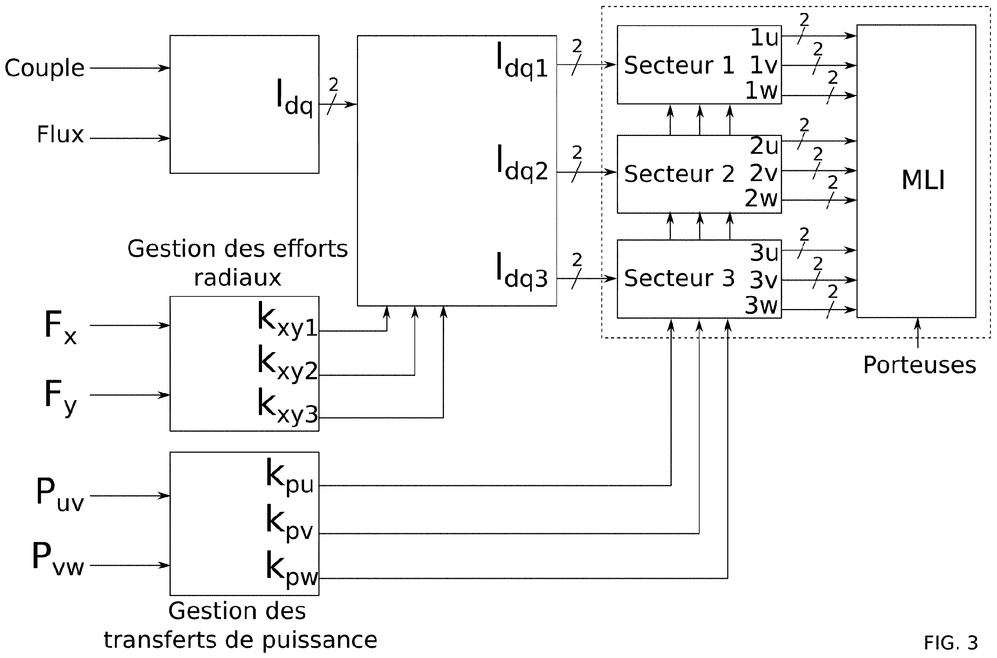

Selon la figure 3, nous allons à présent décrire le procédé de commande appliqué au système multi-sources de la figure 2b. Le procédé de commande selon l'invention est appliqué par chaque circuit de contrôle de chaque convertisseur 3 du système. Dans un autre mode de réalisation, le procédé peut être appliqué par un circuit de contrôle général à tous les convertisseurs 3 par exemple. Le procédé comprend les étapes suivantes :
- première répartition des courants de la pluralité de sources d'alimentation vers au moins une zone de la machine électrique,
- seconde répartition des courants vers au moins une fraction de chaque zone.

Les deux étapes du procédé sont indépendantes l'une de l'autre quel que soit le mode de réalisation. Les bobinages de la machine électrique sont répartis en trois zones, ici correspondant à des secteurs : secteurs S1, S2 et S3 tels que représentés par les lignes en pointillées sur la figure 2b. Les secteurs S1, S2, S3 correspondent à des zones bien définies de la machine électrique M. Le secteur S1 comprend les phases A1+/-, B1+/- et C1+/-. Le secteur S2 comprend les phases A2+/-, B2+/- et C2+/-. Le secteur S3 comprend les phases A3+/-, B3+/- et C3+/-.

Les secteurs S1, S2, S3 sont ensuite fractionnés. Chaque fraction est associée à au moins une phase de la machine électrique. Ici, les fractions regroupent une bobine de chaque phase A1, B1, C1 pour le secteur S1, une bobine de chaque phase A2, B2, C2 pour le secteur S2 et une bobine de chaque phase A3, B3, C3 pour le secteur S3. Le procédé de commande s'applique de la même manière au système multi-sources décrit à la figure 2a, seul le nombre de sources d'alimentation diffère.

Selon la figure 3, à partir du point de fonctionnement en couple et en flux à atteindre et en fonction de la vitesse, les courants de références *I_{dq}* à appliquer sont exprimés dans le repère de Park, ils correspondent aux courants que l'on retrouverait dans la machine électrique de référence (voir Figs. 1a,1b). À partir des besoins en termes d'efforts radiaux à appliquer, ces courants sont répartis en *I*_{*dq*1}, *I_{dq2}* et *I*_{*dq*3} vers chacun des secteurs S1, S2, S3 en fonction de *K*_{*xy*1}, *K*_{*xy*2} et *K*_{*xy*3}. Ces courants *I*_{*dq*1}, *I*_{*dq*2} et *I*_{*dq*3} sont ensuite fractionnés sur les trois fractions (1u, 1v, 1w), (2u, 2v, 2w) et (3u, 3v, 3w) de chaque secteur S1, S2, S3 en fonction des besoins d'échange d'énergie *Kₚᵤ*, *Kₚᵥ* et *K_{pw}* entre les sources U, V et W.

Par exemple, et dans le cas où les trois tensions *U_{Qi}* sont égales, pour faire un effort radial sur le rotor permettant de l'attirer vers la droite, il faut que le secteur S3 travaille plus que les deux autres, une répartition 25% / 25% / 50% de la puissance totale pour les trois secteurs peut donc être adoptée. Ensuite s'il y a le besoin, en plus, d'une gestion énergétique telle que c'est la source U qui est la plus sollicitée, une répartition 50%/25%/25% de la puissance totale entre les sources peut être adoptée.

Donc parmi les 25% alloués au secteur S1, il y en aura 12.5% dans le rang 1, et 6.25% dans les rangs 2 et 3 (12.5 +2*6.25=25). Parmi les 25% alloués au secteur S2, il y en aura 12.5% dans le rang 1, et 6.25% dans les rangs 2 et 3 (12.5 +2*6.25=25). Parmi les 50% alloués au secteur S3, il y en aura 25% dans le rang 1, et 12.25% dans les rangs 2 et 3 (25+2*12.5=50). *K*_{*xy*1}, *K*_{*xy*2} et *K*_{*xy*3} correspondent aux pourcentages associés à chaque secteur S1, S2 , S3. *Kₚᵤ*, *Kₚᵥ* et *K_{pw}* correspondent aux pourcentages de la puissance totale qui sont assignés à chaque source U, V, W.

À partir de la machine électrique M, on utilise les degrés de liberté *k_{B}* et *p* pour interconnecter des sources sans que les transferts d'énergie entre sources ne perturbent les efforts radiaux dans la machine. L'utilisation de *p* = 3 convertisseurs de puissance par source permet de conserver le degré de liberté pour le contrôle actif des efforts radiaux.

Que ce soit à la figure 2a ou à la figure 2b, chaque source est au final associée à des bobinages situés tout autour de la machine, ce qui permet de gérer l'utilisation des différentes sources sans générer d'efforts radiaux au rotor. En revanche, avec une hiérarchisation adaptée du contrôle, il est tout de même possible d'utiliser les degrés de libertés de la structure pour générer des efforts radiaux et réaliser un centrage magnétique sans que cela entraîne un déséquilibre entre les sources. Il faut d'abord fixer la contribution en termes d'efforts de chaque secteur (ou paire de pôles) et ensuite gérer la répartition d'usage des sources qui sera la même dans les différents secteurs. Ce procédé est applicable quelles que soient les caractéristiques (*n*, *p*) de la machine. Le nombre de subdivisions d'encoches *k_{B}* peut être supérieur ou égal au nombre de sources.

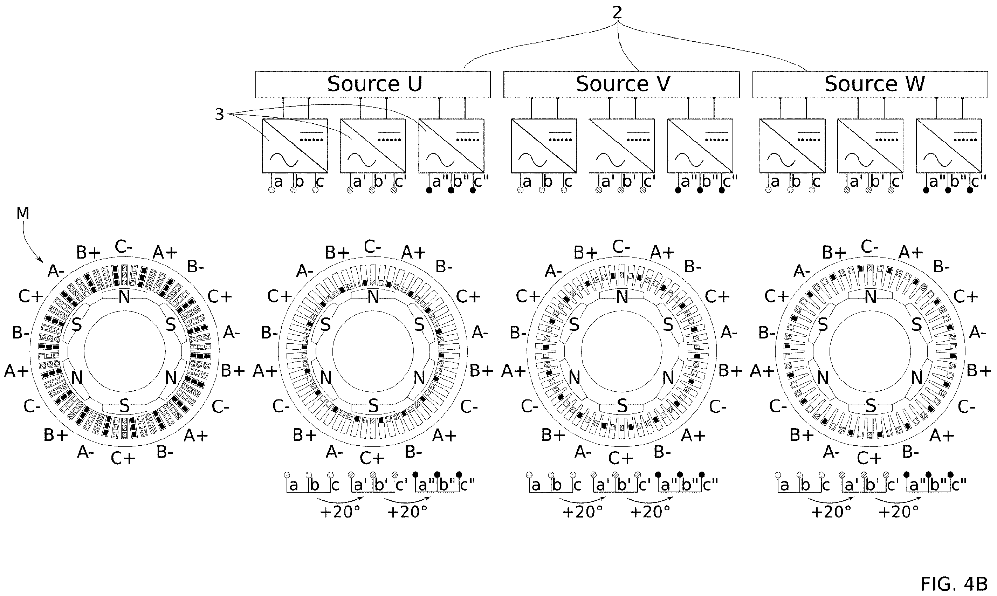

La figure 4a présente un système multi-sources avec contrôle des ondulations de couple selon un premier mode de réalisation. La machine électrique des figures 4a et 4b est divisée en trois zones ou systèmes triphasés sur le même principe que les figures 2a et 2b. Ces trois systèmes triphasés correspondant aux trois paires de pôles de ladite machine.

D'après la figure 4a, la machine électrique M est connectée à deux sources 2 : U et V. Chaque source 2 est associée à trois convertisseurs de puissance 3. Chaque convertisseur est associé à des zones de la machine électrique correspondant à des systèmes *mₚ*-phasés distincts. Ces différents systèmes *mₚ*-phasés sont décalés d'un angle électrique, l'angle électrique étant égal à 20 degrés. L'angle est égal à 20 degrés dans ce mode de réalisation car l'exemple comprend dix-huit encoches par paires de pôles (360/18=20). Le système *mₚ*-phasé associé au premier convertisseur de chaque source est associé à l'encoche a de la phase A+/-, à l'encoche b de la phase B+/- et à l'encoche c de la phase C+/-, soit la première encoche de chaque phase citée. Pour le deuxième convertisseur de chaque source, celui-ci est associé aux deuxièmes encoches a', b', c' des phases citées. Pour le troisième convertisseur de chaque source, celui-ci est associé aux troisièmes et dernières encoches a", b" et c" des phases citées. La source U alimente les bobines de rang 1 dans chacune des zones et la source V alimente les bobines de rang 2 dans chacune des zones. Dans d'autres modes de réalisation, il est possible de mélanger les rangs et les zones pour une même alimentation, par exemple le rang 1 de la zone 1 et le rang 2 de la zone 2 sont associés à une même source.

La figure 4b présente un système multi-sources avec contrôle des ondulations de couple, sans couplage entre les fonctions « gestion de l'énergie » et gestion des « ondulations de couple ». Selon la figure 4b, on considère une structure permettant d'associer *k_{B}* sources d'énergie à une machine électrique. Chaque source alimente n convertisseurs qui sont chacun associés à des zones de la machine électrique correspondant à des systèmes *mₚ*-phasés distincts. Ces différents systèmes *mₚ-*phasés sont décalés d'un certain angle électrique et représentés avec des nuances de couleur différentes sur la figure suivante. Ce décalage est précisé par des traits en pointillés au niveau d'un pôle de la phase A.

D'après la figure 4b, et sur le même principe que pour la figure 4a, la machine électrique M est connectée à trois sources 2 : U, V et W. Chaque source 2 est associée à trois convertisseurs de puissance 3. Chaque convertisseur est associé à des systèmes *mₚ*-phasés distincts. Ces différents systèmes *mₚ*-phasés sont décalés d'un angle électrique, l'angle électrique étant égal à 20 degrés. L'angle est égal à 20 degrés dans ce mode de réalisation car l'exemple comprend dix-huit encoches par paires de pôles (360/18=20). Le système *mₚ*-phasé associé au premier convertisseur de chaque source est associé à l'encoche a de la phase A+/-, à l'encoche b de la phase B+/- et à l'encoche c de la phase C+/-, soit la première encoche de chaque phase citée. Pour le deuxième convertisseur de chaque source, celui-ci est associé aux deuxièmes encoches a', b', c' des phases citées. Pour le troisième convertisseur de chaque source, celui-ci est associé aux troisièmes et dernières encoches a", b" et c" des phases citées. La source U alimente les bobines de rang 1 dans chacune des zones, la source V alimente les bobines de rang 2 dans chacune des zones et la source W alimente les bobines de rang 3 dans chacune des zones. Dans d'autres modes de réalisation, il est possible de mélanger les rangs et les zones pour une même alimentation, par exemple le rang 1 de la zone 1, le rang 2 de la zone 2 et le rang 3 de la zone 3 sont associés à une même source.

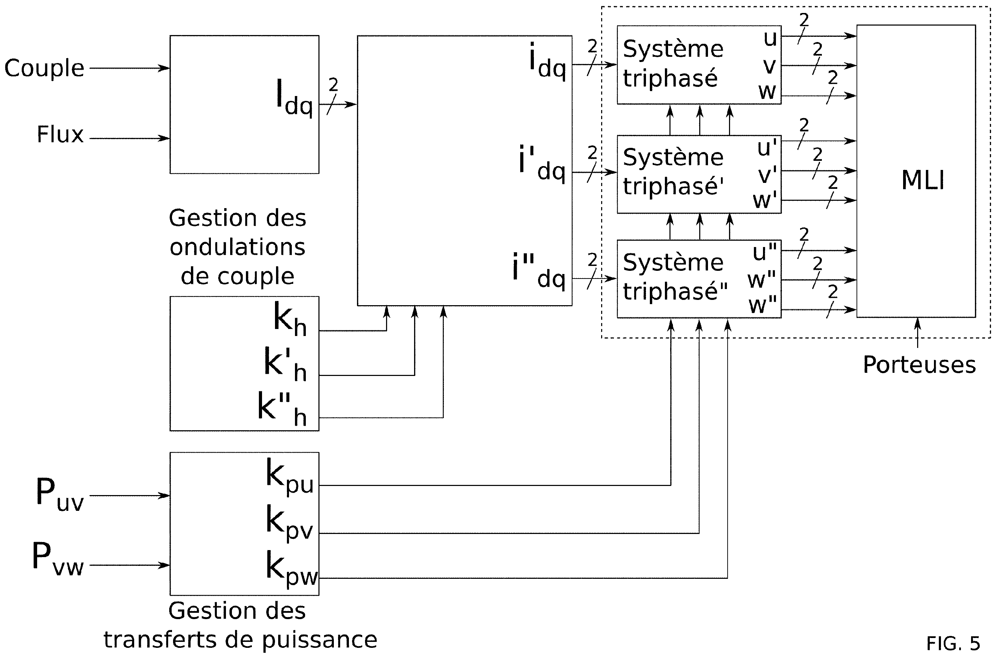

Selon la figure 5, nous allons à présent décrire le procédé de commande appliqué au système multi-sources de la figure 4b. Le procédé de commande selon l'invention est appliqué par chaque circuit de contrôle de chaque convertisseur 3 du système. Dans un autre mode de réalisation, le procédé peut être appliqué par un circuit de contrôle général à tous les convertisseurs 3 par exemple. Comme présenté précédemment, le procédé comprend les étapes suivantes :
- première répartition des courants de la pluralité de sources d'alimentation vers au moins une zone de la machine électrique,
- seconde répartition des courants vers au moins une fraction de chaque zone. Les bobinages de la machine électrique M sont répartis en trois zones correspondant à des systèmes triphasés ou système *mₚ*-phasés, chaque système triphasé étant associé à un convertisseurs 3.

Les systèmes triphasés associés à chaque convertisseur sont ensuite fractionnés. Chaque fraction correspond à des bobines distinctes des bobinages qui constituent les systèmes triphasés de la machine électrique. Ici, pour chaque source, le premier convertisseur alimente une fraction de la zone correspondant aux encoches a, b, c, le deuxième convertisseur alimente une fraction de la zone correspondant aux encoches a', b', c', le troisième convertisseur alimente une fraction de la zone correspondant aux encoches a", b", c". À partir du point de fonctionnement en couple et en flux à atteindre soit la vitesse, les courants de référence *I_{dq}* à appliquer sont exprimés dans le repère de Park, ils correspondent aux courants que l'on retrouverait dans la machine électrique de référence (Figs. 1a, 1b). Pour minimiser les ondulations de couple, ces courants *I_{dq}* sont répartis en *I_{dq}*, *I'_{dq}* et *I"_{dq}* vers chacun des systèmes triphasés en fonction de *Kₕ*, *K'ₕ*, *K"ₕ*,. Les courants *I_{dq}*, *I'_{dq}* et *I"_{dq}* sont ensuite fractionnés vers les trois fractions (u, v, w), (u', v', w') et (u", v", w") de chaque système triphasé en fonction des besoins d'échange d'énergie *Kₚᵤ*, *Kₚᵥ* et *K_{pw}* entre les sources U, V et W. Avantageusement, pour minimiser en mode sain l'ondulation du couple appliqué sur le rotor, il faut que les trois systèmes *mₚ*-phasés travaillent équitablement, soit de manière équilibrée. Par exemple, et dans le cas où les trois tensions *U_{Qi}* sont égales, la répartition peut être de 33% / 33% / 33% de la puissance totale pour les trois systèmes *mₚ*-phasés. Ensuite s'il y a le besoin, en plus, d'une gestion énergétique telle que c'est la source U qui est la plus sollicitée par exemple, une répartition 50%/25%/25% de la puissance totale entre les sources peut être adoptée. Donc parmi les 33% alloués au premier système *mₚ*-phasés, il y en aura 16.7% dans le rang 1, et 8.4% dans les rangs 2 et 3 (16.7 +2*8.4=33). Il en va de même pour les deux autres zones. À partir de la machine électrique M, on utilise les degrés de liberté *k_{B}* et *n* pour interconnecter des sources sans que les transferts d'énergie entre sources ne perturbent les ondulations de couple dans la machine. L'utilisation de *n* = 3 convertisseurs de puissance par source permet de conserver le degré de liberté pour le contrôle actif des ondulations de couple.

Que ce soit à la figure 4a ou à la figure 4b, les convertisseurs associés à chaque source alimentent au final des bobinages correspondant à des zones correspondant à des systèmes *mₚ*-phasés, ce qui permet de gérer l'utilisation des différentes sources sans dégrader les harmoniques du couple. Cela est permis par une hiérarchisation adaptée du contrôle : Il faut d'abord fixer le contrôle des harmoniques entre les différents systèmes *mₚ*-phasés et ensuite gérer la répartition d'usage des sources qui sera la même au sein des différents systèmes *mₚ*-phasés. Ce procédé est applicable quelles que soient les caractéristiques (*n*, *p*) de la machine et le nombre de subdivisions d'encoche *k_{B}.* De préférence, *k_{b}* est supérieur ou égal au nombre de sources. Avantageusement, *k_{b}* est égal au nombre de sources dans le système. Le procédé de commande décrit s'applique de la même manière au système multi-sources décrit à la figure 4a.

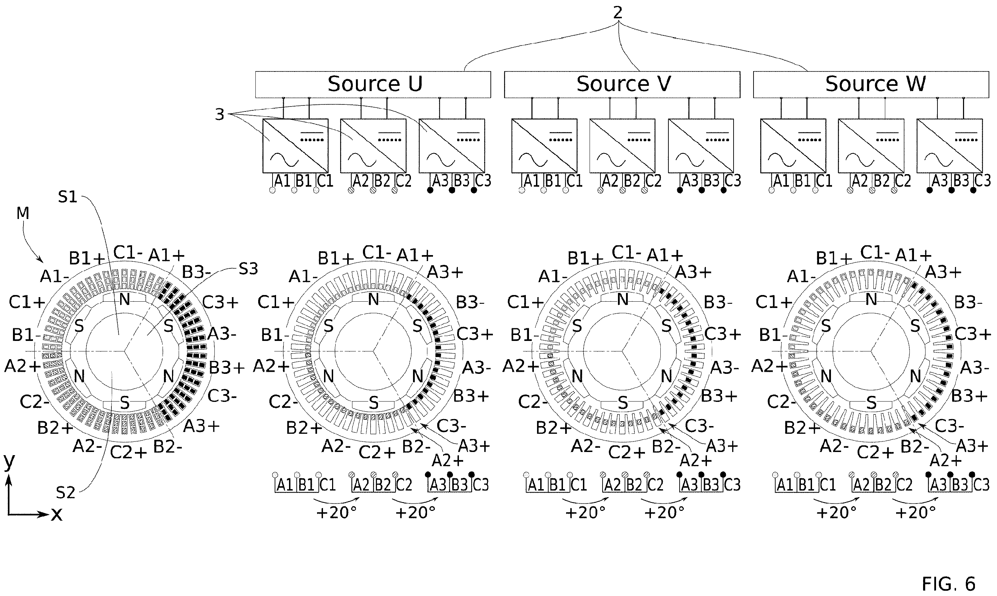

En référence à la figure 6, nous allons décrire un système multi-sources avec contrôle des ondulations de couple et des efforts radiaux, sans couplage entre les fonctions gestion de l'énergie et gestion des efforts mécaniques. La machine électrique de la figure 6 est divisée en trois zones ou secteurs (S1, S2, S3) correspondant aux trois paires de pôles de ladite machine.

La machine électrique M est connectée à trois sources 2 : U, V et W. Chaque source 2 est associée à trois convertisseurs de puissance 3. Pour chaque source d'alimentation 2, le premier convertisseur 3 est associé à la première paire de pôles statoriques (zone S1) symbolisée par les phases A1+/-, B1+/- et C1+/-. Le deuxième convertisseur est associé à la deuxième paire de pôles statoriques (zone S2) symbolisée par les phases A2+/-, B2+/- et C2+/-. Le troisième convertisseur est associé à la troisième paire de pôles statoriques (zone S3) symbolisée par les phases A3+/-, B3+/- et C3+/. Les paires de pôles sont associées à des systèmes triphasés décalés d'un angle électrique, l'angle électrique étant égal à 20 degrés. L'angle est égal à 20 degrés dans ce mode de réalisation car l'exemple comprend dix-huit encoches par paires de pôles (360/18=20). La source U alimente les bobines de rang 1 dans chacune des zones, la source V alimente les bobines de rang 2 dans chacune des zones et la source W alimente les bobines de rang 3 dans chacune des zones. Dans d'autres modes de réalisation, il est possible de mélanger les rangs et les zones pour une même alimentation, par exemple le rang 1 de la zone 1, le rang 2 de la zone 2 et le rang 3 de la zone 3 sont associés à une même source.

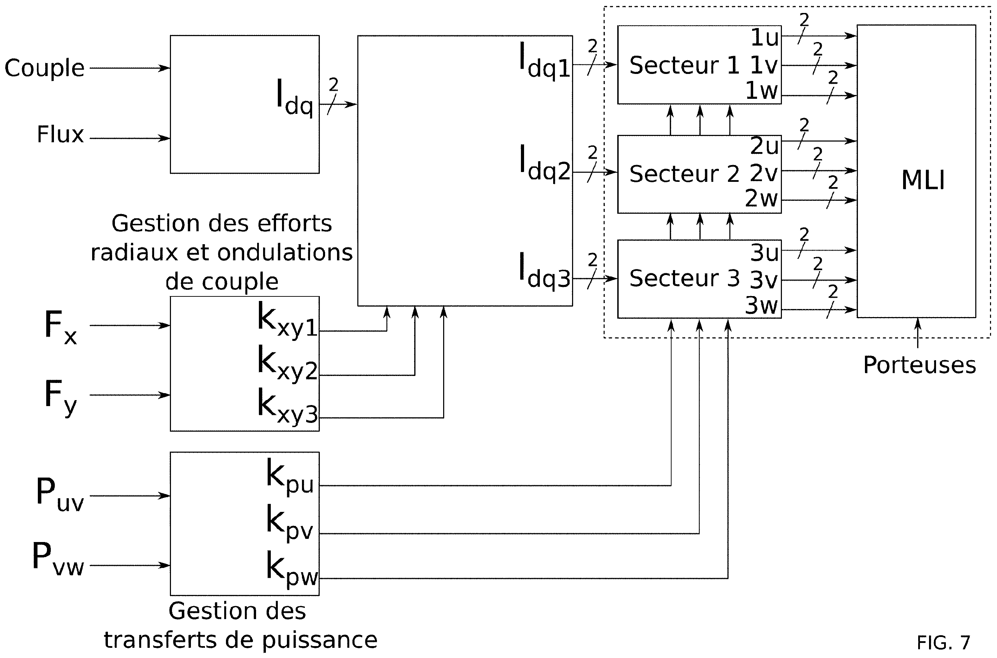

Selon la figure 7, nous allons à présent décrire le procédé de commande appliqué au système multi-sources de la figure 6. Le procédé de commande selon l'invention est appliqué par chaque circuit de contrôle de chaque convertisseur 3 du système. Dans un autre mode de réalisation, le procédé peut être appliqué par un circuit de contrôle général à tous les convertisseurs 3 par exemple. Comme décrit précédemment, le procédé comprend les étapes suivantes :
- première répartition des courants de la pluralité de sources d'alimentation vers au moins une zone de la machine électrique,
   - seconde répartition des courants vers au moins une fraction de chaque zone.

Les bobinages de la machine électrique M sont répartis en trois zones correspondant à des secteurs : secteurs S1, S2 et S3 tels que représentés par les lignes en pointillés sur la figure 6. Les secteurs S1, S2 et S3 correspondent à des zones bien définies de la machine électrique M. Le secteur S1 comprend les phases A1+/-, B1+/- et C1+/-. Le secteur S2 comprend les phases A2+/-, B2+/- et C2+/-. Le secteur S3 comprend les phases A3+/-, B3+/- et C3+/-. Dans ce mode de réalisation les trois secteurs définis par les lignes en pointillés ont des phases qui sont décalées d'un angle électrique, l'angle électrique étant égal à 20 degrés (voir explication dans le mode de réalisation des figures précédentes).

Les zones correspondant à des secteurs S1, S2 et S3 sont ensuite fractionnées. Chaque fraction est associée à une phase de la machine électrique. Ici, les fractions regroupent une bobine de chaque phase A1, B1, C1 pour le secteur S1, une bobine de chaque phase A2, B2, C2 pour le secteur S2 et une bobine de chaque phase A3, B3, C3 pour le secteur S3.À partir du point de fonctionnement en couple et en flux à atteindre, les courants de référence *I_{dq}* à appliquer sont exprimés dans le repère de Park, ils correspondent aux courants que l'on retrouverait dans la machine électrique de référence (Figs. 1a, 1b). Pour minimiser les ondulations de couple et appliquer les efforts radiaux désirés, ces courants *I_{dq}* sont répartis en *I*_{*dq*1}, *I*_{*dq*2} et *I*_{*dq*3} vers chacun des secteurs en fonction de *K*_{*xy*1}, *K*_{*xy*2} et *K*_{*xy*3}. Les courants *I*_{*dq*1}, *I*_{*dq*2} et *I*_{*dq*3} sont ensuite fractionnés vers les trois fractions (1u, 1v, 1w), (2u, 2v, 2w) et (3u, 3v, 3w) de chaque système triphasé en fonction des besoins d'échange d'énergie *Kₚᵤ*, *Kₚᵥ* et *K_{pw}* entre les sources U, V et W. Par exemple, et dans le cas où les trois tensions *U_{Qi}* sont égales, pour faire un effort radial sur le rotor permettant de l'attirer vers la droite, il faut que le secteur S3 travaille plus que les deux autres sur l'axe d du repère de Park. Une répartition 25% / 25% / 50% sur les courants dans l'axe d pour les trois secteurs peut donc être adoptée. Pour l'axe q, il faut conserver une répartition équitable pour garantir le minimum d'ondulation de couple, une répartition 33% / 33% / 33% % sur les courants dans l'axe q pour les trois secteurs peut donc être adoptée. Ensuite s'il y a le besoin, en plus, d'une gestion énergétique telle que c'est la source U qui est la plus sollicitée, une répartition 50%/25%/25% de la puissance totale entre les sources peut être adoptée. Donc parmi les 25% alloués au secteur S1 suivant les courants dans l'axe d, il y en aura 12.5% dans le rang 1, et 6.25% dans les rangs 2 et 3 (12.5 +2*6.25=25). Parmi les 33% alloués au secteur S1 pour les courants dans l'axe q, il y en aura 16.7% dans le rang 1, et 8.4% dans les rangs 2 et 3 (16.7 +2*8.4=33). Donc parmi les 25% alloués au secteur S2 suivant les courants dans l'axe d, il y en aura 12.5% dans le rang 1, et 6.25% dans les rangs 2 et 3 (12.5 +2*6.25=25). Parmi les 33% alloués au secteur S2 pour les courants dans l'axe q, il y en aura 16.7% dans le rang 1, et 8.4% dans les rangs 2 et 3 (16.7 +2*8.4=33). Parmi les 50% alloués au secteur S3 suivant les courants dans l'axe d, il y en aura 25% dans le rang 1, et 12.25% dans les rangs 2 et 3 (25+2*12.5=50). Parmi les 33% alloués au secteur S3 pour les courants dans l'axe q, il y en aura 16.7% dans le rang 1, et 8.4% dans les rangs 2 et 3 (16.7 +2*8.4=33).

À partir de la machine triphasée M, on utilise les degrés de liberté *k_{B}*, n et *p* pour interconnecter des sources sans que les transferts d'énergie entre sources ne perturbent les ondulations de couple dans la machine. L'utilisation de n = *p* = 3 convertisseurs de puissance par source permet de conserver le degré de liberté pour le contrôle actif des harmoniques de couple et des efforts radiaux.

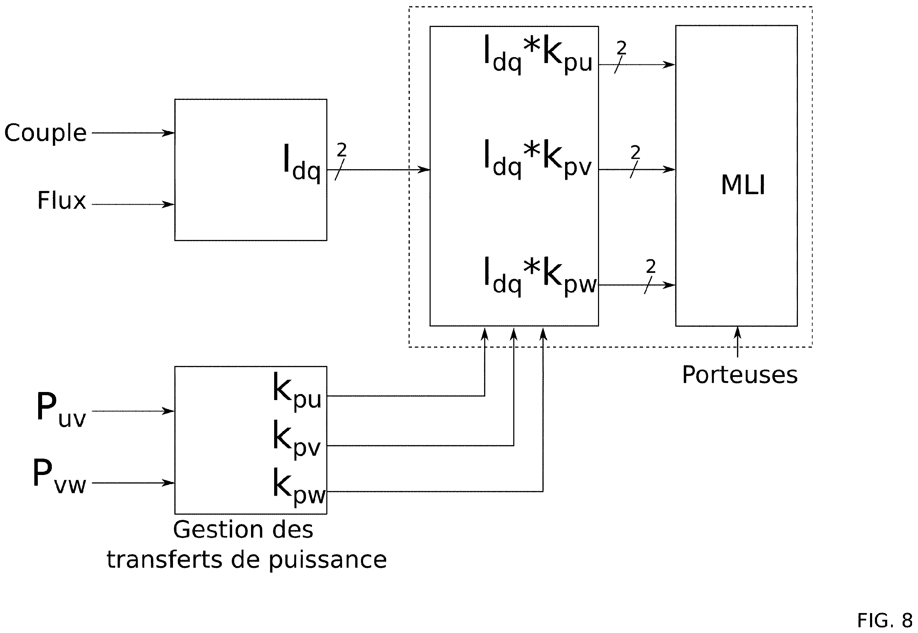

Comme présenté à la figure 8, le procédé de la présente invention peut également être appliqué à un système comprenant plusieurs sources d'alimentation 2, chaque source d'alimentation étant connectée à un unique convertisseur 3. En effet, un tel système comprend une machine électrique M tel que décrit à la figure 1 par exemple ainsi qu'une pluralité de sources d'alimentation 2 chacune connecté à un seul convertisseur de puissance 3. La machine électrique M est connectée à trois sources 2 : U, V et W. Pour chaque source d'alimentation 2, le convertisseur 3 est associé aux paires de pôles des phases A+/-, B+/- et C+/-. La source U alimente les paires de pôles de rang 1, la source V alimente les paires de pôles de rang 2 et la source w alimente les paires de pôles de rang 3. Dans d'autres modes de réalisation, il est possible de mélanger les rangs et les zones pour une même alimentation, par exemple le rang 1 de la zone 1 et le rang 2 de la zone 2 sont associés à une même source.

Le procédé de commande appliqué à ce système multi-sources particulier est appliqué par chaque circuit de contrôle de chaque convertisseur 3. Dans un autre mode de réalisation, le procédé peut être appliqué par un circuit de contrôle général à tous les convertisseurs 3 par exemple. Le procédé comprend alors les étapes suivantes :
- répartition directe des courants de la pluralité de sources d'alimentation vers au moins une fraction de la machine électrique.

Dans ce mode de réalisation, la machine électrique est directement fractionnée. Chaque fraction est associée à une phase de la machine électrique. Ici, les fractions correspondent aux bobinages des phases A, B, C.

À partir du point de fonctionnement en couple et en flux à atteindre, les courants de références *I_{dq}* à appliquer sont exprimés dans le repère de Park, ils correspondent aux courants que l'on retrouverait dans la machine électrique de référence (Figs. 1a et 1b). Ces courants *I_{dq}* sont ensuite répartis vers les trois subdivisions *I_{dq}* * *Kₚᵤ*, *I_{dq}* * *Kₚᵥ et I_{dq}* * *K_{pw}* en fonction des besoins d'échange d'énergie *Kₚᵤ*, *Kₚᵥ* et *K_{pw}* entre les sources U, V et W. *Pᵤᵥ* et *P_{vw}* sont les puissances échangées entre les source U et V et entre les sources V et W, respectivement.

L'invention concerne également quatre variantes de procédés de commande qui sont applicables aux structures décrites précédemment en fonction du résultat à atteindre. Ces variantes concernent uniquement l'étape de fractionnement de la machine électrique, c'est-à-dire la répartition des courants vers chacune des fractions de chaque zone. Ces variantes sont également applicables même s'il n'y a pas de subdivision de la machine en zone et qu'il n'y a que le fractionnement en plusieurs rangs dans les encoches. Cette répartition permet un transfert de puissance entre-sources :
- soit fondé sur la fréquence de rotation du champ magnétique produit par le rotor de la machine,
- soit fondé sur une fréquence arbitraire par contrôle MLI des onduleurs,
- soit fondé sur une activation/désactivation séquentielle des subdivisions,
- soit fondé sur la fréquence de découpage des onduleurs par réglage du déphasage des porteuses MLI.

Les variantes du procédé de commande peuvent s'appliquer aux machines électrique mettant en jeu plusieurs fractions au sein des mêmes encoches statoriques (pour un bobinage réparti) ou autour des mêmes dents statoriques (pour un bobinage concentré). Les variantes du procédé de commande peuvent s'appliquer aux structures possédant au moins deux fractions dans leurs encoches. Les variantes concernent les interactions entre les subdivisions hautement couplées. Elles permettent de contrôler les convertisseurs de puissance associés à des sources distinctes mais dont les bobinages partagent les mêmes encoches.

La première variante pour le découplage du transfert de puissance inter-source et de la gestion des efforts radiaux (Particularité structurelle) a été introduite précédemment au travers de la répartition de la puissance dirigée vers chaque zone. Par exemple, dans le cas où les trois tensions *U_{Qi}* sont égales, s'il y a le besoin, d'une gestion énergétique telle que ce soit la source U qui est la plus sollicitée, une répartition 50%/25%/25% de la puissance totale entre les sources peut être adoptée. Alors dans chaque zone, 50% de la puissance est dirigée vers le rang 1, 25% de la puissance vers le rang 2 et 25% de la puissance vers le rang 3. C'est cette première variante qui a été utilisée tout au long de la description des modes de réalisation. Cela est généralisable pour tout nombre de subdivision hautement couplée *k_{B}.*

En ce qui concerne la deuxième variante pour le transfert de puissance entre les sources à une fréquence arbitraire, l'autopilotage permet de fixer le rapport cyclique moyen appliqué en MLI aux *k_{B}* convertisseurs de puissance est réalisé à partir de l'angle électrique. Cet angle est obtenu au travers d'une mesure grâce à un capteur de position ou au travers d'un estimateur permettant une commande « sans-capteurs de position ». Dans le cas où les trois tensions *U_{Qi}* sont égales, la contribution en couple de chaque fraction est équilibrée 33%/33%/33%, le procédé assigne donc une première valeur de rapport-cyclique chargée de contrôler la répartition équitable du courant dans chaque fraction. Une composante supplémentaire en courant évoluant à une fréquence arbitraire est introduite en vue de transférer de l'énergie entre les différentes subdivisions. La fréquence arbitraire ne peut pas être égale à la fréquence électrique liée à la rotation de la machine électrique M. Cela est généralisable pour tout nombre de subdivision hautement couplée *k_{B}.*

En ce qui concerne la troisième variante pour le procédé de contrôle pour la gestion séquentielle de l'usage des sources basée sur un contrôle conventionnel de machine, un seul contrôle conventionnel de machine est implémenté, au lieu d'en avoir *k_{B}*>1. Celui-ci distribue les mêmes signaux MLI triphasés au *k_{B}* convertisseurs de puissance qui ont chacun leur propre circuit de pilotage. Le seul degré de liberté employé pour la gestion des différents convertisseurs de puissance est le signal « enable » qui est associé aux circuits de pilotage des différents convertisseurs de puissance et qui permet ou non de les mettre dans l'état « Haute-Impédance ». Cette simplicité est rendue possible par l'agencement hautement couplé des bobinages. Lorsque la machine est en rotation, il devient donc possible de moduler séquentiellement l'usage des sources sans incidence sur le couple mécanique. Par exemple, et dans le cas où les trois tensions *U_{Qi}* sont égales, si on souhaite une répartition 50%/25%/25% de la puissance totale entre les sources, on peut faire en sorte qu'une première fraction soit tout le temps active, tandis que les deuxième et troisième fractions soient désactivées 50 % du temps. L'échelle de temps de la désactivation des fractions doit-être planifiée de manière à ce que les contraintes thermiques soient respectées pour chaque fraction. Cela est généralisable pour tout nombre de subdivision hautement couplée *k_{B}.*

En ce qui concerne la quatrième et dernière variante pour le transfert de puissance entre les sources à la fréquence de découpage, les rapports cycliques sont calculés à partir d'un autopilotage de machine conventionnelle. Au sein d'une brique élémentaire, les signaux MLI associés à chacune des *mₚ* phases sont associées à des porteuses entrelacées avec un déphasage de 2*π*/*mₚ*. Les systèmes *mₚ* phasés de porteuse sont déphasés d'un certain angle de commande d'un convertisseur de puissance à l'autre. Par exemple *φ_{UV}*, est l'angle de commande représentant le retard angulaire du système *mₚ* phasés de porteuses de la brique élémentaire associée à une source V par rapport au système *mₚ* phasés de porteuses de la brique élémentaire associée à une source U. Lorsque *φ_{UV}*>0, un transfert de puissance de la source V vers la source U à la fréquence de découpage apparaît. Ce transfert est indépendant du point de fonctionnement de la machine et peut donc également s'opérer à rotor bloqué. Lorsque le convertisseur de la brique élémentaire est constitué de *mₚ* onduleurs en ponts complets, les porteuses des *mₚ* phases peuvent être identiques (déphasage de 2*π*/*mₚ* n'est pas nécessaire). Il suffit en revanche d'utiliser un déphasage *φ_{UV}* entre les porteuses d'une brique élémentaire associée à la source U et celles d'une brique élémentaire associée à la source V pour induire un transfert de puissance entre les deux sources. Cela est généralisable pour tout nombre de subdivision hautement couplée *k_{B}*.

Typiquement au moins un des moyens du dispositif selon l'invention précédemment décrits, de préférence chacun des moyens du dispositif selon l'invention précédemment décrit sont des moyens techniques.

Typiquement, chacun des moyens du dispositif selon l'invention précédemment décrits peuvent comprendre au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels.

Bien sûr, l'invention n'est pas limitée aux exemples qui viennent d'être décrits et de nombreux aménagements peuvent être apportés à ces exemples sans sortir du cadre de l'invention.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Système multi-sources comprenant une machine électrique (M), du type comprenant un rotor et un stator (1), le stator (1) comprenant une pluralité de bobinages (10,11,12) fait d'enroulements de matériau conducteur isolé, chaque bobinage (10,11,12) comprenant une pluralité de bobines (100,101,102) alimentées indépendamment,
le système comprenant également une pluralité de sources d'alimentation continues (2) et une pluralité de convertisseurs d'électronique de puissance (3) associés à différentes bobines (100,101,102) de la machine électrique (M), chaque source d'alimentation (2) alimentant un ou des convertisseurs d'électronique de puissance (3) et chaque source d'alimentation (2) étant reliée à au moins une bobine (100,101,102) de chaque bobinage (10,11,12) de la machine électrique (M), les bobines (100,101,102) d'un même bobinage (10,11,12) étant alimentées par des signaux de même phase et le stator (1) comprenant des encoches, **caractérisé en ce que** chaque encoche comprend les bobines (100,101,102) d'un même bobinage (10,11,12) et **en ce que** les bobines (100,101,102) d'un même bobinage (10,11,12) sont alimentées par des sources d'alimentation (2) distinctes.

2. Système selon la revendication 1, dans lequel la pluralité de bobinages (10,11,12) est répartie en au moins deux zones.

3. Système selon la revendication 2, dans lequel, les au moins deux zones correspondent à des secteurs (S1, S2, S3) de machine électrique.

4. Système selon la revendication 2, dans lequel les au moins deux zones correspondent à des systèmes *mₚ*-phasés de machine électrique.

5. Système selon l'une quelconque des revendications 2 à 4, dans lequel les au moins deux zones sont fractionnées, chaque fraction de chaque zone étant associée à un convertisseur d'électronique de puissance (3), la fraction et son convertisseur d'électronique de puissance (3) constituant une brique élémentaire de conversion électromécanique.

6. Système selon la revendication 5, dans lequel chaque brique élémentaire de conversion électromécanique est associée à une source d'alimentation (2).

7. Système selon la revendication 4, dans lequel les systèmes *mₚ*-phasés correspondent à des systèmes *mₚ*-phasés de machine électrique décalés temporellement d'un angle électrique non multiple de 60°.

8. Système selon l'une quelconque des revendications précédentes, dans lequel le nombre de bobines (100,101,102) dans un enroulement est supérieur ou égal au nombre de sources d'alimentation.

9. Système selon l'une quelconque des revendications précédentes, dans lequel les enroulements ont un nombre de spires multiple du nombre de sources d'alimentation (2).

10. Procédé de commande appliqué sur un système multi-sources selon l'une quelconque des revendications précédentes par au moins un circuit de contrôle, le procédé comprenant les étapes suivantes :
- première répartition des courants de la pluralité de sources d'alimentation (2) vers au moins une zone de la machine électrique,
- seconde répartition des courants vers au moins une fraction de chaque zone.

11. Procédé de commande selon la revendication 10, dans lequel lorsque chaque source d'alimentation alimente un convertisseur d'électronique de puissance, le procédé comprend l'étape suivante :
- répartition directe des courants de la pluralité de sources d'alimentation (2) vers au moins une fraction de la machine électrique.

12. Procédé de commande selon l'une quelconque des revendications 10 à 11, dans lequel la répartition des courants de la pluralité de sources d'alimentation (2) vers au moins une fraction est équilibrée.

13. Procédé de commande selon l'une quelconque des revendications 10 à 12, dans lequel le procédé comprend également l'étape suivante :
- introduction d'une composante supplémentaire en courant évoluant à une fréquence arbitraire.

14. Procédé de commande selon l'une quelconque des revendications 10 à 13, dans lequel le procédé comprend également une étape de contrôle de l'au moins une fraction permettant d'activer et/ou désactiver au moins une fraction de la machine électrique pendant une période de temps T.

15. Procédé de commande selon l'une quelconque des revendications 10 à 14, dans lequel la répartition des courants de la pluralité de sources d'alimentation vers au moins une fraction est également réalisée en fonction d'une fréquence de découpage de l'un ou des convertisseurs d'électronique de puissance.

## Patentansprüche

1. Mehrquellensystem, das eine elektrische Maschine (M) von dem Typ umfasst, der einen Rotor und einen Stator (1) umfasst, wobei der Stator (1) eine Vielzahl von Wicklungen (10, 11, 12) umfasst, die aus Aufwicklungen von isoliertem leitfähigem Material bestehen, wobei jede Wicklung (10, 11, 12) eine Vielzahl von Spulen (100, 101, 102) umfasst, die unabhängig mit Strom versorgt werden,
wobei das System auch eine Vielzahl von Gleichstromversorgungsquellen (2) und eine Vielzahl von elektronischen Leistungswandlern (3) umfasst, die verschiedenen Spulen (100, 101, 102) der elektrischen Maschine (M) zugehörig sind, wobei jede Versorgungsquelle (2) einen oder mehrere elektronische Leistungswandler (3) mit Strom versorgt und jede Stromversorgungsquelle (2) mit mindestens einer Spule (100, 101, 102) jeder Wicklung (10, 11, 12) der elektrischen Maschine (M) verbunden ist, wobei die Spulen (100, 101, 102) einer selben Wicklung (10, 11, 12) mit Signalen der gleichen Phase versorgt werden und der Stator (1) Nuten umfasst, **dadurch gekennzeichnet, dass** jede Nut Spulen (100, 101, 102) einer selben Wicklung (10, 11, 12) umfasst, und dadurch, dass die Spulen (100, 101, 102) einer selben Wicklung (10, 11, 12) von getrennten Stromversorgungquellen (2) mit Strom versorgt werden.

2. System nach Anspruch 1, wobei die Vielzahl von Wicklungen (10, 11, 12) in mindestens zwei Zonen aufgeteilt sind.

3. System nach Anspruch 2, wobei die mindestens zwei Zonen Sektoren (S1, S2, S3) der elektrischen Maschine entsprechen.

4. System nach Anspruch 2, wobei die mindestens zwei Zonen mp-phasigen Systemen der elektrischen Maschine entsprechen.

5. System nach einem der Ansprüche 2 bis 4, wobei die mindestens zwei Zonen unterteilt sind, wobei jeder Teil jeder Zone einem elektronischen Leistungswandler (3) zugehörig ist, wobei der Teil und sein elektronischer Leistungswandler (3) einen Grundbaustein zur elektromechanischen Umwandlung bilden.

6. System nach Anspruch 5, wobei jeder Grundbaustein zur elektromechanischen Umwandlung einer Stromversorgungsquelle (2) zugehörig ist.

7. System nach Anspruch 4, wobei die mp-phasigen Systeme mp-phasigen Systemen einer elektrischen Maschine entsprechen, die zeitlich um einen elektrischen Winkel versetzt sind, der kein Vielfaches von 60° ist.

8. System nach einem der vorhergehenden Ansprüche, wobei die Anzahl der Spulen (100, 101, 102) in einer Wicklung größer oder gleich der Anzahl von Stromversorgungsquellen ist.

9. System nach einem der vorhergehenden Ansprüche, wobei die Wicklungen eine Anzahl von Windungen aufweisen, die ein Vielfaches der Anzahl von Stromversorgungsquellen (2) ist.

10. Steuerverfahren, das auf ein Mehrquellensystem nach einem der vorhergehenden Ansprüche durch mindestens eine Steuerschaltung angewandt wird, wobei das Verfahren die folgenden Schritte umfasst:
- erste Verteilung von Strömen von der Vielzahl von Stromversorgungsquellen (2) hin zu mindestens einer Zone der elektrischen Maschine,
- zweite Verteilung von Strömen hin zu einem Teil jeder Zone.

11. Steuerverfahren nach Anspruch 10, wobei, wenn jede Stromversorgungsquelle einen elektronischen Leistungswandler mit Strom versorgt, das Verfahren den folgenden Schritt umfasst:
- direkte Verteilung der Ströme von der Vielzahl von Stromversorgungsquellen (2) hin zu mindestens einem Teil der elektrischen Maschine.

12. Steuerverfahren nach einem der Ansprüche 10 bis 11, wobei die Verteilung der Ströme von der Vielzahl von Stromversorgungsquellen (2) hin zu mindestens einem Teil ausgeglichen wird.

13. Steuerverfahren nach einem der Ansprüche 10 bis 12, wobei das Verfahren auch den folgenden Schritt umfasst:
- Einführung einer zusätzlichen Stromkomponente, die sich mit einer beliebigen Frequenz verändert.

14. Steuerverfahren nach einem der Ansprüche 10 bis 13, wobei das Verfahren auch einen Schritt des Steuerns des mindestens einen Teils umfasst, der das Aktivieren und/oder Deaktivieren mindestens eines Teils der elektrischen Maschine während eines Zeitraums T erlaubt.

15. Steuerverfahren nach einem der Ansprüche 10 bis 14, wobei die Verteilung der Ströme von der Vielzahl von Stromversorgungsquellen hin zu dem mindestens einen Teil auch in Abhängigkeit von einer Schaltfrequenz des einen oder der mehreren elektronischen Leistungswandler ausgeführt wird.

## Claims

1. Multi-source system comprising an electric machine (M), of the type comprising a rotor and a stator (1), the stator (1) comprising a plurality of windings (10,11,12) made of insulated conductive material, each winding (10,11,12) comprising a plurality of independently powered coils (100,101,102), the system also comprising a plurality of DC power sources (2) and a plurality of power electronics converters (3) associated with different coils (100,101,102) of the electric machine (M), each power source (2) powering one or more power electronics converters (3) and each power source (2) being connected to at least one coil (100,101,102) of each winding (10,11,12) of the electric machine (M), the coils (100,101,102) of the same winding (10, 11, 12) being supplied with signals of the same phase and the stator (1) comprising slots, **characterised in that** each slot comprises the coils (100, 101, 102) of the same winding (10, 11, 12) and **in that** the coils (100, 101, 102) of the same winding (10, 11, 12) are powered by separate power sources (2).

2. System according to claim 1, wherein the plurality of windings (10,11,12) is divided into at least two areas.

3. System according to claim 2, wherein the at least two areas correspond to electric machine sectors (S1, S2, S3).

4. System according to claim 2, wherein the at least two areas correspond to *mₚ*-phase electric machine systems.

5. System according to any one of claims 2 to 4, wherein the at least two areas are split, each fraction of each area being associated with a power electronics converter (3), the fraction and its power electronics converter (3) constituting an elementary electromechanical conversion unit.

6. System according to claim 5, wherein each elementary electromechanical conversion unit is associated with a power source (2).

7. System according to claim 4, wherein the *mₚ*-phase systems correspond to *mₚ*-phase electric machine systems temporally shifted by an electrical angle that is not a multiple of 60°.

8. System according to any one of the preceding claims, wherein the number of coils (100,101,102) in a winding is greater than or equal to the number of power sources.

9. System according to any one of the preceding claims, wherein the windings have a number of turns that is a multiple of the number of power sources (2).

10. Control method applied to a multi-source system according to any one of the preceding claims by at least one control circuit, the method comprising the following steps:
- first distribution of the currents from the plurality of power sources (2) to at least one area of the electric machine,
- second distribution of the currents to at least a fraction of each area.

11. Control method according to claim 10, wherein when each power source supplies a power electronics converter, the method comprises the following step:
- direct distribution of the currents from the plurality of power sources (2) to at least one fraction of the electric machine.

12. Control method according to any one of claims 10 to 11, wherein the distribution of the currents of the plurality of power sources (2) to at least one fraction is balanced.

13. Control method according to any one of claims 10 to 12, wherein the method also comprises the following step:
- introduction of an additional current component evolving at an arbitrary frequency.

14. Control method according to any one of claims 10 to 13, wherein the method also comprises a step of controlling the at least one fraction for activating and/or deactivating at least one fraction of the electric machine for a period of time T.

15. Control method according to any one of claims 10 to 14, wherein the distribution of currents from the plurality of power sources to at least one fraction is also carried out as a function of a switching frequency of one or more power electronics converters.
